# EUROPEAN PATENT APPLICATION

(11) **EP 4 523 806 A1**
(43) Date of publication of application: **19.03.2025**
(21) Application number: 23196855.3
(22) Date of filing: 12.09.2023
(51) Int. Cl.: B09C 1/00, C02F 1/70, C02F 1/72, C02F 1/78, C02F 103/06

(54) **A GAS DIFFUSION EQUIPMENT FOR AN IN-SITU INJECTION WELL/PIEZOMETER FOR THE DECONTAMINATION OF POLLUTED GROUNDWATER**

(71) Applicant: Societa' Italiana Acetilene & Derivati S.I.A.D. S.p.A. in breve S.I.A.D. S.p.A., 24126 Bergamo (IT)
(72) Inventor: BISSOLOTTI, Giorgio, 24126 BERGAMO (IT); PASINETTI, Eleonora, 24126 BERGAMO (IT); PERONI, Michela, 24126 BERGAMO (IT); CREMA, Andrea, 24126 BERGAMO (IT)
(74) Representative: Bianchetti & Minoja with Trevisan & Cuonzo IPS SRL

(57) **Abstract**

The present invention refers to a gas diffusion equipment, for an *in-situ* injection well/piezometer for the decontamination of polluted groundwater, that comprises a diffuser body, a diffusion microporous membrane associated to said diffuser body, at least one connecting structure adapted to be connected to at least one gas supply line of an injection well/piezometer, and in which said diffusion microporous membrane is made of stainless steel and comprises a plurality of pores ranging from 10 to 50 µm, preferably smaller than 20 µm, configured to allow bubbles formation with micrometric dimensions.

## Description

### Background of the invention

Legislation regarding soil and groundwater reclamation is currently paying particular attention to *in situ* remediation technologies because of the absence of any disposal and extraction of soil and/or water.

At the present, in Italy, most of remediation systems are still tied to extraction/exportation and disposal processes. These systems are very expensive and produce a large quantity of waste that need to be transported and disposed of, and, in many cases, the disposal system involves stocking the polluted soil in authorised landfill, thus making a great negative environmental impact.

As an example, one of the technologies widely used at the present for the groundwater remediation is the so-called *Pump* & *Treat* technologies, consisting in pumping and treating groundwater on-site.

Unfortunately, this technology requires great economic resources and it can last many years before achieving significant contamination reduction. Moreover, the system often does not reach the pollutant limits target because the contaminants, adsorbed or trapped in the soil, are slowly released and solubilised in groundwater, making them hard to remove, unless the usage of other expensive technologies, thus determining long pollution tails.

The treatment of pumped water is also usually made on site, thus needing the installation of big decontamination plants, that have another negative environmental impact on the site operation. Besides, the on-site water treatment is usually constituted by activated carbon plants that produce waste to be disposed, in particular exhausted carbons, and, often, the pumped groundwater is only stocked and must be disposed as waste. In particular, even the treated water sometimes requires specific disposal, because the discharge on superficial water is not always allowed. Thus, in general, the disposal represents the main cost of the on-site groundwater treatment.

For these reasons, *in situ* technologies, widely spread in the USA for a long time, in the last years are also diffusing in Italy and other Countries, due mostly to its undoubted economic and efficiency advantages.

Among these ones, the most widespread is the so-called *Air-Sparging* technology. This remediation system consists in injecting air in the soil, using compressors, with flow in the range of 40-60 m³/h, in order to remove the contamination of the saturated and unsaturated soil fraction through biologic degradation and stripping processes.

The *Air sparging* is usually combined with a vapour extraction process to recover stripped volatile substances and, subsequently, subject them to treatment. The remediation system requires, therefore, the provision of a large number of injection and suction wells, together with the usage of compressors and vapours treatment system. The vapour treatment is mainly made by activated carbon adsorption, with the waste production, relating to exhausted carbons, that needs to be afterwards properly disposed. As such, *air-sparging* involves also both significant on-site physical obstacles and application costs, related mainly to electrical supply and waste disposal.

Moreover, the efficiency of *air sparging* technology depends strictly on the soil characteristics, and it is very important to pay attention to preferential way that could avoid the homogeneous recovering of vapours. In particular, *air sparging* is proper working when the aquifer depth is not greater than 15-20 m from the piezometric level, since deeper applications require powerful compression systems with high energy consumption, making the treatment not economically sustainable.

In order to reduce stripping processes and improve biological processes, decontamination of saturated soil fraction could involve the reduction of air injection, till a value of around 8-15 m³/h. In this case, the technology is called *biosparging.* In case of volatile substances contamination, such as light hydrocarbons, *biosparging* could involve stripping phenomena too, since the gas flows remain significant, diffusion systems are not very efficient, and the use of air does not optimise the oxygen dissolution in water. For these reasons *biosparging* often requires combined vapour extraction and treatment systems, with consequent increase of economic and managerial costs. Moreover, *biosparging* requires the use of compressors too, so it needs electric power and a place where to install the machines. The use of air allows to reach oxygen concentrations in groundwater of around 8-9 mgO₂/l at most, leading to an oxygen diffusion slow and difficult.

In the last years different injection systems have been introduced which uses pure oxygen instead of air. In fact, pure oxygen allows to reach, in groundwater, an oxygen concentration higher than 40-60 mgO₂/l, depending on both the depth of the water column and the liquid temperature. By having a higher oxygen concentration, the gas diffusion phenomena can be significantly increased, while the gas flows can be reduced, compared to air, leading to the reduction of the stripping process of the volatile substances present in the groundwater.

As evident, the diffusion equipment has a great influence on the gas dissolution efficiency. In particular, the higher is the gas-liquid exchange surface, the more efficient is the oxygen dissolution in groundwater. Therefore, the smaller the gas bubbles dimensions, the higher is probability of the gas dissolution.

At present, one of the systems, applying this principle, is the ISOC^{™} (*In Situ Submerged Oxygen Curtain*). This technology has been reported using membranes having the form of hollow fibres, wherein such hollow fibres membranes are able to diffuse oxygen, while minimising the number of bubbles going out of the water.

This system, which is known to be very efficient in terms of gas dissolution in groundwater, results to be partially limited by biofouling phenomena, i.e. biomass and/or bacteria adhesion to the membrane, that, in the course of time, determine the membrane blinding, decreasing the system efficiency. To avoid biofouling, this technology is preferentially applied out of polluted zone, leaving the groundwater flow to transport oxygen inside the contaminated zone. This operational way induces longer remediation times and, consequently, an increase of costs, since the velocity of the groundwater flow could be very low.

Another system that allows to greatly increase the oxygen concentration in groundwater is based on the introduction of chemical substances in the aquifer, typically MgO₂, then releasing oxygen when in contact with water. Among these systems, the so-called ORC *(Oxygen Release Compounds)* is the most known. ORC consists in the introduction of oxygenate substances in the form of slurry or "socks" to be immersed in groundwater. Slurry injection can be performed through dedicated wells, valved tubes, or even through trenches. In the latter case, trenches reaching the aquifer deepness must be dug in order to distribute the products in a uniform way. Instead, in case of use of socks lowered in the wells, these substances must be periodically changed and it has been reported that the oxygen diffusion is blocked by biomass growth on their surface.

EP1914016, in the name of the same applicant, presented a gas injection system operating in polluted groundwater using a porous membrane for the microdiffusion in the liquid of oxidising and/or reducing gases, thus allowing the groundwater remediation from the polluting substances through oxidation and reduction processes. In particular, gases preferentially used are pure oxygen, air, ozone for oxidation processes; while for reduction processes, hydrogen, methane, propane; and nitrogen for some biologic processes.

This system is characterised by the fact that does not require electric energy, it is applied *in situ* and it is not invasive, thus allowing to leave the application area operative and free from obstacles. Moreover, the system allows to reach large gas concentrations in the application wells due to a high diffusion velocity, reducing the remediation time.

However, the known system described above still presents significant drawbacks, namely a certain amount of biofouling on the gas diffusion surface during the utilisation for long periods, a limited work-life of the diffuser, issues regarding the salt deposition and/or precipitation on the membrane surface during the use.

### Summary of the invention

A gas injection system operating in polluted groundwater has now been found and is the object of the invention. The scope of such system is that of both increasing the performance and overcoming the disadvantages that afflicts the state of the art.

In particular, the present invention concerns the improvements made on the gas diffusion capabilities, efficiency and durability of the system by using different manufacturing techniques and materials for the porous membrane fabrication, by introducing an improved layout of the diffusion equipment, and by using carbon dioxide as a cleaning agent of the diffusion equipment.

The system of the invention therefore presents the advantages of using a porous membrane for the microdiffusion in groundwater of oxidising and/or reducing gases; it is applied *in situ* with a very low site impact; it is not invasive, allowing to leave the application area operative and free from obstacles, it does not require electric energy; it does not produce any volatile substances stripping; it does not produce waste to be disposed; it has a high application flexibility.

Furthermore, the membranes of the present invention can be used with all the gases: pure oxygen, air, ozone for oxidation processes; hydrogen, methane, propane for reduction processes; rare gases, argon, krypton, xenon, radon, as tracer gases; nitrogen for reactive gases dilution or inertization processes and foremost carbon dioxide both for chemical and cleaning processes.

Moreover, further objects of present invention are: avoiding biofouling processes at gas diffusion surface, increasing sensibly the work-life of the diffuser, achieving very high micro diffusion of the gas flow, thus improving the diffusion velocity and reducing the remediation times, keeping the membrane surface clean from salt deposition and precipitation, thanks to the use of carbon dioxide and/or of oxidising or reducing gas mixed with carbon dioxide, overall resulting in simplifying the maintenance operations and decreasing the maintenance costs.

The scope and objects mentioned above, as well as others that will be explained hereinafter, are achieved by a gas diffusion equipment as claimed in independent claim 1, and by a decontamination system as claimed in claims 14and 18.

Other advantageous features are claimed in the dependent claims and preferred embodiments of the invention are described.

### Detailed description of the invention

The invention will be now disclosed with reference to an exemplifying, not limiting, embodiment thereof as shown in attached drawings:
- Fig.1 schematically represents, in the whole, a decontamination system according to the state of the art;
- Fig.2 schematically represents, in the whole, a decontamination system according to the invention, having a "rack" configuration;
- Fig.3 is perspective view of a first embodiment of a diffusion equipment for a decontamination system according to the invention, and presenting an interchangeable microporous membrane with one supply line;
- Fig.3A is schematic cross-sectional side view of the equipment of fig. 3:
- Fig.4 is a perspective view of a variant of a first embodiment of a diffusion equipment for a decontamination system according to the invention, presenting an interchangeable microporous membrane with two supply lines;
- Fig.4A is schematic cross-sectional side view of the equipment of fig. 4:
- Fig.5 is a perspective view of a second embodiment of a diffusion equipment for a decontamination system according to the invention, in which the microporous membrane and the diffuser body are integrated, and with one supply line;
- Fig.5A is a schematic top view of the equipment of fig.5;
- Fig.5B is a schematic lateral view of the equipment of fig.5;
- Fig.5C is a cross-sectional view of the equipment represented in fig.5B carried out according to the axis VC-VC;
- Fig.6 is a perspective view of a variant of a second embodiment of a diffusion equipment for a decontamination system according to the invention, in which the microporous membrane and the diffuser body are integrated, and with two supply lines;
- Fig.6A is a schematic top view of the equipment of fig.6;
- Fig.6B is a schematic lateral view of the equipment of fig.6;
- Fig.6C is a cross-sectional view of the equipment represented in fig.6B carried out according to the axis VIC-VIC.
- Fig.7 is a graph reporting the results obtained by using mixture of oxidising gases with carbon dioxide.
- Fig.8 and Fig.8A are graphs reporting the results of the durability of microporous membrane.

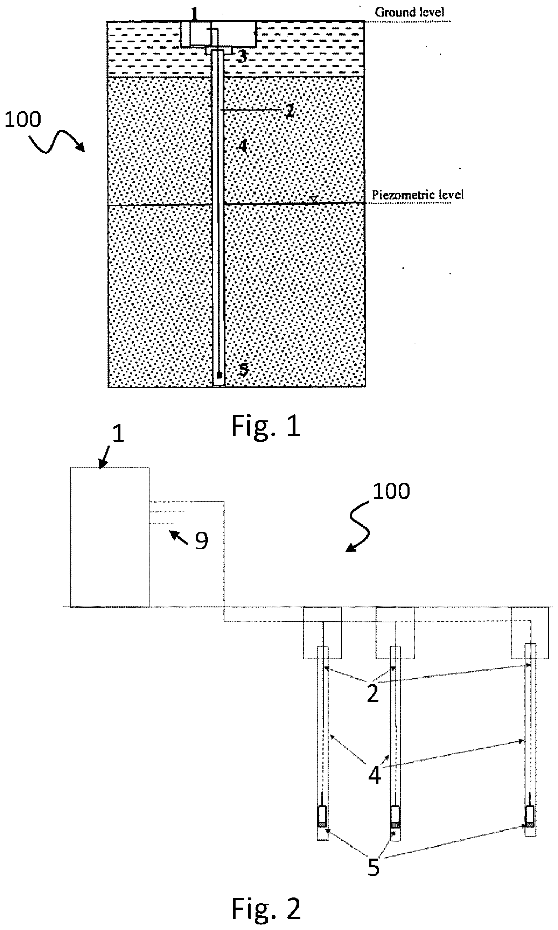

With particular reference to Fig. 1 and Fig. 2, a decontamination system 100 for an *in-situ* injection for the decontamination of polluted groundwater comprises:
- a gas alimentation equipment, generically indicated by reference number 1, situated at the head 3 of an injection well 4;
- an alimentation line 2 extended along all the well 4 and connected to the gas alimentation equipment 1;
- a gas diffusion equipment 5.

Fig.1 shows a decontamination system 100 in a single well configuration. In this arrangement, the gas alimentation equipment 1 is connected to only one injection well 4.

Referring to Fig.2, the decontamination system 100 comprises a plurality of supply lines 2 extended along respective injection wells 4. Such system is presented in a so-called "rack" configuration. Through this layout it is possible to connect the gas alimentation equipment 1 to at least two injection wells 4. In this case, the decontamination system 100 consists substantially of:
- the gas alimentation equipment 1, generally situated in a dedicated area of the site;
- main supply lines 9, connecting the alimentation equipment 1 to the injection wells 4;
- gas supply lines 2, extended along all the wells 4;
- a gas diffusion equipment 5 as outlined hereinafter.

Therefore, in accordance with the present invention, the decontamination system 100 comprises a plurality of gas supply lines 2 extended along the respective injection wells/piezometer 4 and connected to the gas alimentation equipment 1 by means of the relative main supply lines 9. In particular, the number of the main supply lines 9, gas supply lines 2 and diffusion equipment 5 of the decontamination system 100 may depend on the number and position of the injection wells 4.

According to the invention, a gas diffusion equipment 5 is described. This diffusion equipment 5 can be applied in a decontamination system 100 both in the single well configuration and in the "rack" configuration.

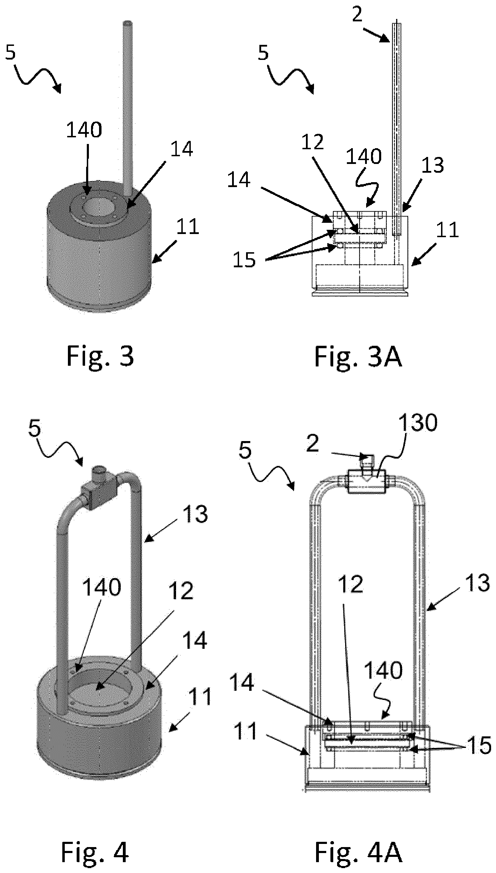

As shown with regard to the embodiments of Fig.3 to Fig.6C, the gas diffusion equipment 5 for an in-situ injection well/piezometer 4 for the decontamination of polluted groundwater comprises:
- a diffuser body 11;
- a diffusion microporous membrane 12, 12' associated to the diffuser body 11;
- at least one connecting structure 13 adapted to be connected to one or more gas supply lines 2 of an injection well/piezometer 4.
wherein said diffusion microporous membrane 12, 12' can be:
- rigidly integrated with the diffuser body 11, or
- interchangeable with respect to the diffuser body 11,

In accordance with the present invention, the diffusion microporous membrane 12, 12' is made of stainless steel or in a synthetic polymer or in a boron silicate glass and comprises a plurality of pores ranging from 10 to 50 µm, preferably smaller than 20 µm, configured to allow bubbles formation with micrometric dimensions.

Preferably the configuration found for pores sizes is even smaller than 16 µm.

In a first alternative, the diffusion microporous membrane 12, 12' can be rigidly integrated with the diffuser body 11 and made of stainless steel or in a synthetic polymer.

In a second alternative, the diffusion microporous membrane 12, 12' can be interchangeable with respect to the diffuser body 11 and made of stainless steel or in a synthetic polymer or in a boron silicate glass.

In a further alternative, the diffusion microporous membrane 12, 12' can be rigidly integrated with the diffuser body 11 and made in a boron silicate glass.

Advantageously, the diffusion equipment 5 is connected to the gas supply line 2 of the decontamination system 100 by means of a connecting structure 13, and the diffusion equipment 5 diffuses gases in groundwater through the diffusion microporous membrane 12, 12' associated to the diffuser body 11.

Advantageously stainless steel is known to be highly resistant to heat, chemical corrosion and to sudden changes of temperature.

Preferably, the microporous membrane 12, 12' is made of sintered stainless steel or of stainless steel created by means of an additive manufacturing/3D printing technique from a stainless-steel powder.

More preferably the microporous membrane 12, 12' is made with a Laser Based Powder Bed Fusion on Metal (PBF-LB/M) technique.

The diffusion microporous membrane 12, 12' is realized preferably in the form of a disc. The membrane 12, 12' can have a total diameter of 25-50 mm with a thickness of 2-4 mm.

The diffusion microporous membrane 12, 12' comprises preferably a round-shaped planar surface, thus allowing the gas diffusion through a planar and preferably horizontal surface, so as to both minimise the coalescence phenomena and keep high gas dissolution rate.

As an alternative, for specific applications, the diffusion microporous membrane 12, 12' can also present a curved profile.

The use of additive manufacturing or sintering techniques allows to obtain a stainless steel microporous membrane 12, 12' with high performance in production of micrometric bubbles from the entire diffusion surface minimizing coalescence effects.

The microporous membrane, with analogue characteristics of dimension, porosity and diffusion performance, as previously described, could be made also in synthetic polymers or boron silicate glass.

In case of microporous membrane 12, 12' made of synthetic polymer, the last is preferably selected among Polysulfone (PSF), Polyvinylidene fluoride (PVDF), Polytetrafluoroethylene (PTFE) or Polypropylene (PP).

The diffuser body 11 is preferably also made of stainless steel with an additive manufacturing or of a synthetic polymer selected from Polysulfone (PSF), Polyvinylidene fluoride (PVDF), Polytetrafluoroethylene (PTFE) or Polypropylene (PP).

Preferably, the diffuser body 11 can be made with a Laser Based Powder Bed Fusion on Metal (PBF-LB/M) technique.

Preferably the at least one connecting structure 13 is a self-supporting structure integrated with the diffuser body 11.

Indeed, in the field, the easy handling of diffusers is a very important operational aspect. For this reason, the self-supporting structure 13 for gas feeding consists preferably of a stainless-steel line, connecting the gas supply line 2 with the diffuser body 11 and, at the same time, allowing to support the diffuser body 11 itself, avoiding the need of any additional devices, for example cables or ropes, for insert and/or extracting the diffuser body 11 in/from the wells 4, respectively.

The self-supporting structure can preferably comprise two or more connecting structure 13 connected to the diffuser body 11.

With particular reference to the first embodiment of the gas diffusion equipment 5 shown in Figures 3 to 4C, the microporous membrane 12 is an interchangeable microporous membrane adapted to be replaced within said diffuser body 11. In this first embodiment of gas diffusion equipment 5, the material of microporous membrane 12 can be different from the material of the diffuser body 11. The diffusion equipment 5 preferably comprises a tightening system 14 to fix the diffusion microporous membrane 12 to the diffuser body 11.

Furthermore, the gas diffusion equipment 5 preferably comprises at least one seal 15 between the microporous membrane 12 and the diffuser body 11 configured to prevent gas leakage.

In fact, to increase the gas flow in the groundwater, it is extremely important to avoid any type of gas leakages. Any leakage leads to an increase of the bubbles dimensions, thus reducing the gas efficiency transfer to the water.

More in detail, the tightening system 14 comprises a ring nut 140, configured to be screwed on the seal gasket 15 and to fix it to the diffuser body 11, preventing any gas leakages.

The tightening system 14 of the diffusion equipment 5 guarantees then the gas passage through the diffusion microporous membrane 12, without any losses from the clamping edges.

Figures 4 and 4A show a variant of the first embodiment of the gas diffusion equipment 5 that differs from that of figures 3 and 3A in that it comprises two connecting structures 13. The two connecting structures 13 are connected to a gas supply line 2 by means of a three-way connector 130.

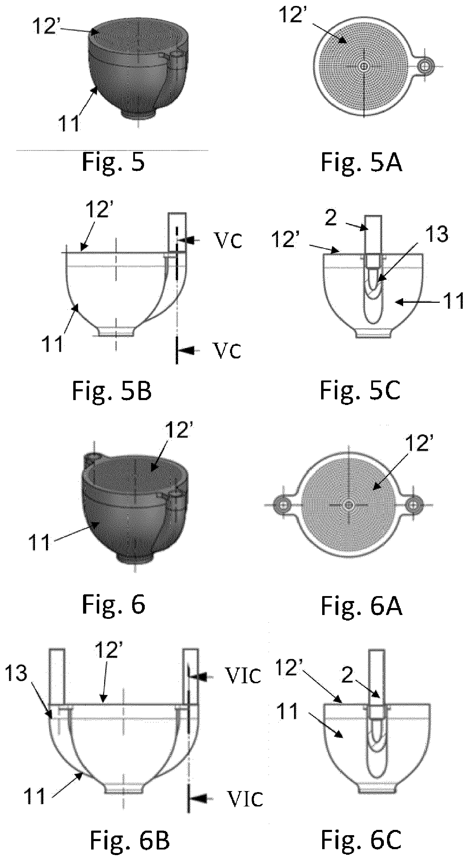

With particular reference to the second embodiment of the gas diffusion equipment shown in Figures 5 to 6C, the gas diffusion equipment 5 introduces a layout of the diffuser body 11 in which the microporous diffusion membrane 12' is rigidly integrated with the diffuser body 11 itself.

Advantageously, the shape, the materials, the membrane insertion and sealing system can be selected in order to automatize the gas diffusion equipment 5 construction, thus allowing easy operative field management and guaranteeing high operational performance.

Since both the diffusion microporous membrane 12' and the diffuser body 11 are made preferably of the same material, (either stainless-steel or a synthetic polymer, as explained above, or in a boron silicate glass), they can completely be integrated as a single block, thus presenting also a perfect sealing.

In particular, the diffusion microporous membrane 12' can be welded onto the diffuser body 11 so that the membrane 12' and the body 11 can be integrated together to form a single body.

Alternatively, the diffusion microporous membrane 12' and the diffuser body 11 can be manufactured in one unitary piece (en-bloc) with a 3D-additive manufacturing technique. Being manufactured directly as a single and unitary body, the sealing issue between the membrane and the diffuser body is solved at its source.

In particular, in case of sintered stainless-steel microporous diffusion membrane 12', this can be welded on the diffuser body 11 by means of a Powder Fed Direct Energy Deposition (DED-PF) technique.

The assembly is then completed with the welding of the connecting structure 13 on the diffuser body 11, preferably by a laser welding machine, and the final shape of the gas diffusion equipment 5 can further be finished by machining. Thus, as already mentioned, the connecting structure 13 has also the function of self-supporting structure of the diffuser body 11.

Moreover, the layout of the second embodiment of the gas diffusion equipment 5 makes easier and faster the installation, maintenance and cleaning operations. In fact, it is known that using diffusion membranes to diffuse gas for the reclamation in groundwater leads to the membranes remaining in place and in operation for years. However, periodic maintenance activities are needed to guarantee the correct functioning of the diffusion equipment. Unfortunately, in case of sites with many diffusion equipment, the maintenance operations can be onerous, causing several days of break off of the injection system. In these terms, making easier and faster the maintenance operations leads to decrease significantly both costs and periodic stop of the injection system in groundwater.

The gas diffusion equipment 5 according to the second embodiment, as a single block, is designed also to reduce the weight of the device and optimize the gas outgoing distribution on the diffusion microporous membrane 12' surface, minimizing coalescence effects and increasing the handling, thus leading to maintain the micrometric dimension of the gas bubbles, till a gas flow of 5 Nl_{gas}/h.
This aspect allows to feed, using only a single diffusion equipment 5, a quantity of gas 2-3 times higher than that of the first embodiment, while maintaining a high dissolution efficiency, making the second embodiment of the gas diffusion equipment 5 very useful in high contaminated sites. In fact, the gas is preferably supplied at pressures of about 2.5 bar and flows of about 10-25 cm³/min, equal to 0.6-1.5 Nl/h. Moreover, the second embodiment of the gas diffusion equipment 5 keeps the self-supporting structure for gas feeding with one or two gas supply lines, as for the first embodiment.

The present invention also refers to a method of manufacturing a gas diffusion equipment 5 according to the second embodiment described above, comprising the steps of:
- manufacturing the diffusion microporous membrane 12' with an additive manufacturing or a sintering technique in stainless steel;
- manufacturing the diffuser body 11 with an additive manufacturing or a sintering technique in stainless steel;
- welding the diffusion microporous membrane 12' onto said diffuser body 11.

Preferably, the method comprises also the steps providing the connecting structure 13 and welding it onto the diffuser body 11.

The materials used for the diffusion microporous membrane 12, 12' allow to use any gas and gas mixtures in order to obtain an oxidizing or reduction process.

The present invention also regards a decontamination system 100 for an *in-situ* injection well/piezometer (4) for the decontamination of polluted groundwater as described in the initial part of the present description and comprising at least one gas diffusion equipment 5 as described above.

In particular, the decontamination system 100 is configured to use an oxidizing gas, either pure and/or mixed with other gases, supplied by the gas alimentation equipment 1.

The oxidising gas can be pure or mixed oxygen, or ozone mixed with oxygen or air.

Alternatively, the decontamination system 100 is configured to use a reducing gas, either pure and/or mixed with other gases, supplied by the gas alimentation equipment 1.

The compressed reducing gas can be pure or mixed hydrogen, or pure or mixed methane, or pure or mixed propane, or pure or mixed sulphur dioxide, or pure or mixed hydrogen sulphide.

The decontamination system 100 is also configured to use tracer gases. Such gases can be alternatively Helium, Neon, Argon, Krypton, Xenon or Radon. Nitrogen can also be provided for reactive gases dilution or inertization processes.

Advantageously, in order to keep clean the diffusion porous membrane 12, 12' surface of both embodiments of the gas diffusion equipment 5, thus avoiding, or highly limiting, the effects of salt precipitation/deposition, the gas supplied by the gas alimentation equipment 1 can comprise carbon dioxide (CO₂).

Carbon dioxide can be supplied periodically towards the gas diffusion equipment 5, for example at a concentration of 100%, when cleaning of the diffusion porous membrane 12, 12' is required.

Preferably, however, the gas supplied by the gas alimentation equipment 1 comprises a concentration of 1÷50 %vol of carbon dioxide (CO₂), in order to maintain constantly clean the at least one gas diffusion equipment 5.

Therefore, any gas mixtures involving the use of reacting gases, oxidising or reducing gas and/or tracer gases is preferably mixed with 1÷50 %vol of carbon dioxide (CO₂) so that the microporous membrane 12, 12' is constantly and continuously lapped by carbon dioxide throughout the full decontamination process.

Preferably, the concentration of carbon dioxide (CO₂) in the supplied gas is 2÷30%vol and even more preferably 10-20%vol.

The present invention also regards a decontamination system 100 for an *in-situ* injection well/piezometer 4 for the decontamination of polluted groundwater comprising:
- a gas alimentation equipment 1 situated at the head 3 of at least one injection well 4;
- at least one supply line 2 extended along said injection well 4 and connected to said gas alimentation equipment 1;
- at least one gas diffusion equipment 5 connected to said at least one supply line 2 of said decontamination system 100.

According to the invention, the gas supplied by the gas alimentation equipment 1 comprises at least a concentration of 1-50%vol of carbon dioxide (CO2) to maintain constantly clean the gas diffusion equipment 5 used in an in-situ groundwater decontamination system based on injection of oxidising and/or reducing gases.

The decontamination system of the present invention is thus characterized by:
- efficacy
- high gas diffusion efficiency
- compactness
- very low impact on the remediation site, that remains entirely driveway
- possibility to carry out reclamation while maintaining the site operative
- absence of stripping phenomena
- absence of contact between operators and toxic/irritant/carcinogenic substances
- absence of the *biofouling* phenomena on the diffusion membrane
- easy management
- fast equipment, installation, and extraction of the diffusion system
- absence of waste production
- cost competitiveness compared to traditional systems
- easiness and fastness of sizing using oxygen or reducing gases and tracer gas mixtures
- easiness of management of the system, thanks also to single block diffusers
- limited effect of salt deposition thank to the use of mixture of oxidizing/reducing gas with carbon dioxide

The efficiency of the gas dissolution, for both embodiments of the diffuser, remains higher than 90% after 6 months of continuous use, with the efficiency remains constant, thanks to a low flow supplied, micrometric bubbles dimension, and both diffusion surface disposition and chemical-physical characteristic of the membrane material. Such high efficiency avoids possible undesired phenomena, such as stripping of volatile substances present in groundwater.

The injection system is also characterised by high application flexibility. In fact, the diffuser dimensions can vary from 3 to 50 cm of diameter, or also greater dimensions. This allows to apply the system in wells with different dimensions and does not require realisation of dedicated wells.

The immersion level of the diffuser is then a flexible parameter too. The higher the immersion depth, the higher the concentration of dissolved gas, but the diffuser can be put only up to few centimetres from the piezometric level. By way of example, a diffuser placed 2 meters under the piezometric level, with a water temperature of about 15°C, can reach an oxygen concentration of about 45 mgO₂/l along all the water column in the well.

To promote and increase the diffusion speed through the groundwater, a forced recycling of groundwater from upstream to downstream can be used and, when using particular gases, appropriate security devices for control of pressures and/or explosive levels inside the injection wells can be installed.

Among the various possible applications, the injection system allows to use open or hermetically closed wells. In the former case the system does not require additional controls. In the latter case, a pressure control system provided with an appropriate security device is required in the well. Using closed well allows increasing the pressure of the internal well atmosphere over the piezometric level, determining an increase of oxygen concentration reachable.

The disclosed system can be applied in the following, not limiting cases:
- Groundwater contaminated by organic substances;
- Groundwater contaminated by inorganic substances;
- Groundwater contaminated by hydrocarbon substances;
- Groundwater contaminated by halogenated substances;
- Groundwater contaminated by metallic ions;
- Groundwater with contamination which can be biodegraded through oxidation;
- Groundwater with contamination which can be biodegraded through reduction;
- Groundwater with chemically oxidizable contamination;
- Groundwater with chemically reducible contamination;
- Groundwater that needs pH adjustment;
- Groundwater of sites with any stratigraphic/hydrologic/geologic configuration;
- In general, every saturated soil that needs to be reclaimed.

### Application example

An example of application of the gas diffusion system 100 using carbon dioxide (CO₂) gas mixtures will be disclosed as follows.

The gas diffusion system of the present invention was set up at a lab scale to evaluate the effect onto the microporous diffusion membrane 12, 12' of carbon dioxide mixed with oxidising gases. The microporous diffusion membrane 12, 12' was made from an active aerobic bioremediation plant, active since four years, that showed poor gas diffusion efficiency because of the deposition, during the usage time, of a thin film of inert material. In particular, an X-Ray diffraction analysis revealed that this inert material was composed by quartz, calcite, dolomite, feldspar and mica.

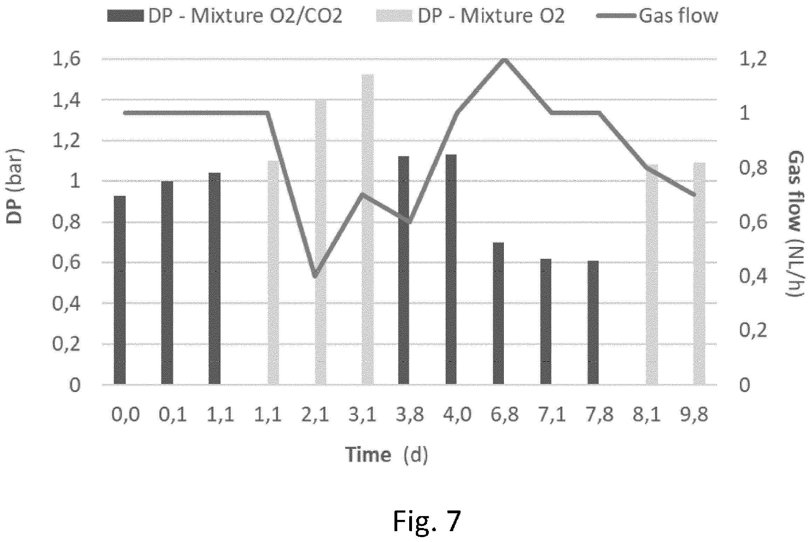

The diffusion microporous diffusion membrane 12, 12' was placed in a batch reactor with fresh water and fed both with oxygen (O₂) and a mixture of 10 %vol CO₂ in O₂, alternately, for several days, while the gas alimentation was set to 1.0 NlO₂/h and the pressure to 2.5 bar. Fig.7 shows the flow (Gas flow) and out-pressure (DP) trends using both O₂ and O₂-CO₂ gas mixture for ten days.

Initially, the diffusion microporous membrane was fed with the O₂-CO₂ mixture, resulting in a constant gas flow and out-pressure of about 1.0 bar. Then, the diffusion microporous membrane was fed with O₂ only and the flow began to decrease, while the out-pressure increased rapidly up to 1.5 bar in two days.

The system was then fed with O₂-CO₂ mixture again, and the flow increased up to 1.2 NlO₂/h, with the pressure decreased down to 0.6 bar in 5 days. The system was finally fed with O₂ for two days, showing an increasing pressure, up to 1.0 bar, and a decreasing flow, down to 0.7 NlO₂/h.

The test showed that the use of a O₂-CO₂ mixture allows to keep the diffusion microporous membrane 12, 12' cleaner and more efficient thanks to the self-cleaning capacity and the carbonate-dissolving ability of gaseous CO₂.

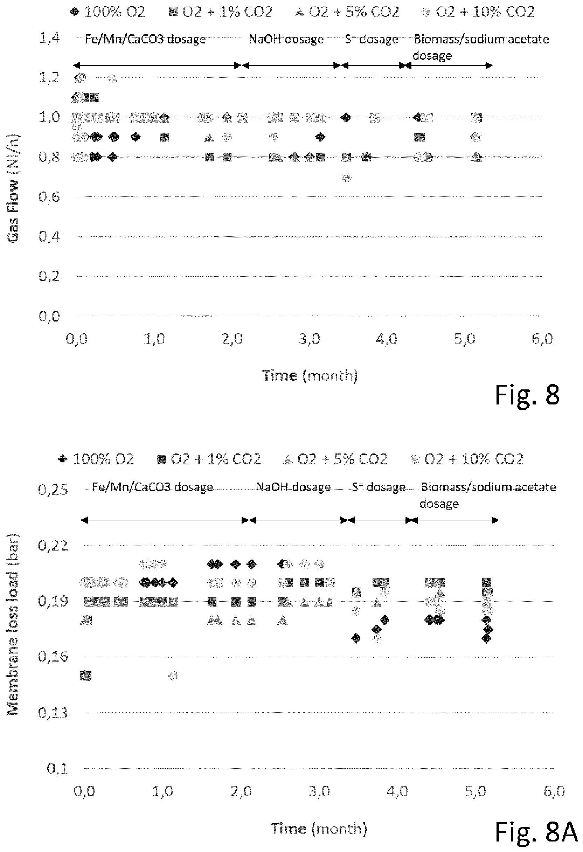

Fig.8 follows the trend of gas flow and membrane loss load of a clean boron silicate membrane, fed with pure oxygen or mixture of oxygen with carbon dioxide (from 1% to 10%vol), in more than 5 months of operation in reactors with volume of 3 litres. Gas flow (Fig.8) and membrane load loss (Fig.8A) kept average values of (0.95 ± 0.1) Nl/h and (0.19 ± 0.01) bar for the entire duration of each test.

This lab-scale tests put in evidence that the membrane conserves its diffusion efficiency (gas flow and membrane load loss) during the time, despite subsequent exogen disturbs, such as inorganic substance dosage (1,000 mgFe²⁺/l, 20 mgMn²⁺/l, 30 mgS⁼/l), pH variation (dosage of 3.2 gCaCO₃/l and 0.5 gNaOH/l), biomass addition (0.5 gTSS/1) and organic substance dosage (0.5 g/l of sodium acetate).

## Claims

1. A gas diffusion equipment (5) for an in-situ injection well/piezometer (4) for the decontamination of polluted groundwater comprising:
- a diffuser body (11),
- a diffusion microporous membrane (12, 12') associated to said diffuser body (11),
- at least one connecting structure (13) adapted to be connected to at least one gas supply line (2) of an injection well/piezometer (4), wherein said diffusion microporous membrane (12, 12') is:
- rigidly integrated with the diffuser body (11), or
- interchangeable with respect to the diffuser body (11),
and wherein said diffusion microporous membrane (12, 12') is made of stainless steel or synthetic polymer or boron silicate glass and comprises a plurality of pores ranging from 10 to 50 µm, preferably smaller than 20 µm, configured to allow bubbles formation with micrometric dimensions.

2. A gas diffusion equipment (5) according to claim 1, wherein said microporous membrane (12, 12') is made of sintered stainless steel or of stainless steel created by means of an additive manufacturing technique from a stainless steel powder.

3. A gas diffusion equipment (5) according to claim 1, wherein said synthetic polymer is selected from Polysulfone (PSF), Polyvinylidene fluoride (PVDF), Polytetrafluoroethylene (PTFE) or Polypropylene (PP).

4. A gas diffusion equipment (5) according to claims 1 and 2, wherein said diffuser body (11) is made of stainless steel or of a synthetic polymer or in a glass.

5. A gas diffusion equipment (5) according to one or more of claims 1, 2 and 4, wherein said microporous membrane (12, 12') and/or said diffuser body (11) are made with a Laser Based Powder Bed Fusion on Metal technique.

6. A gas diffusion equipment (5) according to one or more of the preceding claims, wherein said at least one connecting structure (13) is a self-supporting structure integrated with said diffuser body (11).

7. A gas diffusion equipment (5) according to one or more of the preceding claims, wherein said diffusion microporous membrane (12') is rigidly integrated with said diffuser body (11).

8. A gas diffusion equipment (5) according to claim 7, wherein said diffusion microporous membrane (12') is welded onto said diffuser body (11), preferably by means of a Powder Fed Direct Energy Deposition technique.

9. A gas diffusion equipment (5) according to claim 7, wherein said diffusion microporous membrane (12') and said diffuser body (11) are manufactured in one unitary piece.

10. A gas diffusion equipment (5) according to one or more of claims 7 to 9, configured to maintain a micrometric dimension of the gas bubbles till a gas flow of 5 Nl_{gas}/h.

11. A gas diffusion equipment (5) according to one or more of claims 1-6, wherein said microporous membrane (12) is an interchangeable microporous membrane adapted to be replaced within said diffuser body (11).

12. A gas diffusion equipment (5) according to claim 11, comprising a tightening system (14) configured to tighten said microporous membrane (12) to said diffuser body (11).

13. A gas diffusion equipment (5) according to claims 11 and 12, comprising at least one seal (15) between said microporous membrane (12) and said diffuser body (11), configured to prevent gas leakage.

14. A decontamination system (100) for an *in-situ* injection well/piezometer (4) for the decontamination of polluted groundwater comprising:
- a gas alimentation equipment (1) situated at the head (3) of at least one injection well (4);
- at least one supply line (2) extended along said injection well (4) and connected to said gas alimentation equipment (1);
- at least one gas diffusion equipment (5) according to one or more of the preceding claims,
wherein said at least one gas diffusion equipment (5) is connected to said at least one supply line (2) of said decontamination system (100) by means of said at least one connecting structure (13).

15. The system (100) according to claim 14, comprising a plurality of supply lines (2) extended along respective injection wells (4) and connected to said gas alimentation equipment (1) by means of main supply lines (9).

16. The system (100) according to claim 14 or 15, wherein the gas supplied by said gas alimentation equipment (1) comprises carbon dioxide (CO₂) configured to clean said at least one gas diffusion equipment (5).

17. The system (100) according to one or more of claims 14 to 16, wherein the gas supplied by said gas alimentation equipment (1) comprises a concentration of 1÷50 %vol of carbon dioxide (CO2) configured to maintain constantly clean said at least one gas diffusion equipment (5).

18. A decontamination system (100) for an in-situ injection well/piezometer (4) for the decontamination of polluted groundwater comprising:
- a gas alimentation equipment (1) situated at the head (3) of at least one injection well (4);
- at least one supply line (2) extended along said injection well (4) and connected to said gas alimentation equipment (1);
- at least one gas diffusion equipment (5) connected to said at least one supply line (2) of said decontamination system (100),
**characterized in that** the gas supplied by said gas alimentation equipment (1) comprises at least a concentration of 1-50%vol of carbon dioxide (CO₂) to maintain clean said at least one gas diffusion equipment (5) used in an *in-situ* groundwater decontamination system based on injection of oxidising and/or reducing gases.
